# EUROPEAN PATENT APPLICATION

(11) **EP 4 518 104 A1**
(43) Date of publication of application: **05.03.2025**
(21) Application number: 23796426.7
(22) Date of filing: 26.04.2023
(51) Int. Cl.: H02K 3/12, H02K 3/04

(54) **STATOR AND MOTOR**

(30) Priority: 28.04.2022 JP 2022074601
(71) Applicant: DENSO CORPORATION, Kariya-city, Aichi 448-8661 (JP)
(72) Inventor: WATANABE, Yuki, Kariya- city, Aichi 4488661 (JP); SUZUKI, Takumi, Kariya- city, Aichi 4488661 (JP); SANTO, Shinji, Kariya- city, Aichi 4488661 (JP)
(74) Representative: Kuhnen & Wacker Patent- und Rechtsanwaltsbüro PartG mbB
(86) International application number: PCT/JP2023/016438
(87) International publication number: WO 2023/210686

(57) **Abstract**

A stator (20) includes a plurality of teeth (21b) arranged in a circumferential direction and extending in a radial direction, and a winding (23) wound in a concentrated manner around the teeth. The winding includes a plurality of first system windings (41) to which a first system current is supplied, and a plurality of second system windings (42) to which a second system current is supplied. A first neutral conductor (41a) which is one of the terminal wires of the first system winding and a second neutral conductor (42a) which is one of the terminal wires of the second system winding are drawn out from different positions in the radial direction.

## Description

### CROSS REFERENCE TO RELATED APPLICATIONS

This application is based on Japanese Application No. 2022-074601 filed on April 28, 2022, the disclosure of which is incorporated herein by reference.

### TECHNICAL FIELD

The present disclosure relates to a stator and a motor.

### BACKGROUND

Conventionally, a stator for a motor includes a plurality of teeth arranged in a circumferential direction and extending radially inward, and windings wound in a concentrated manner around the teeth. In such a stator, the windings include a plurality of first system windings to which a first system of three-phase alternating current is supplied and a plurality of second system windings to which a second system of three-phase alternating current is supplied. Therefore, the stator has redundancy (see, for example, Patent Document 1).

### PRIOR ART DOCUMENT

### PATENT DOCUMENT

Patent Document 1: JP 2013-240259 A

### SUMMARY OF INVENTION

In the stator described above, all of the windings have the same arrangement. Therefore, for example, in a configuration in which a first neutral conductor, which is a terminal wire of the first system windings, is connected to each other and a second neutral conductor, which is a terminal wire of the second system windings, is connected to each other, the first neutral conductor and the second neutral conductor are pulled out from the same position in the radial direction. Therefore, there was a problem in that the first neutral conductor and the second neutral conductor are densely gathered together, making connection workability poor.

An object of the present disclosure is to provide a stator and a motor that enable improved connection workability.

In a first aspect of the present disclosure, a stator includes a plurality of teeth arranged in a circumferential direction and extending in a radial direction, and a winding wound around the teeth in concentrated winding. The winding includes a plurality of first system windings to which a first system of current is supplied and a plurality of second system windings to which a second system of current is supplied. A first neutral conductor, which is one terminal wire of the first system winding, and a second neutral conductor, which is one terminal wire of the second system winding, are drawn out from different positions in the radial direction.

According to the same configuration, the first neutral conductor, which is one terminal wire of the first system winding, and the second neutral conductor, which is one terminal wire of the second system winding, are drawn out from the different positions in the radial direction. Therefore, each connection is easier in comparison with a case where they are pulled out from the same position in the radial direction. In other words, since the drawn-out positions of the first neutral conductor and the second neutral conductor are dispersed in the radial direction, crowding of the first neutral conductor and the second neutral conductor can be avoided, and their connection becomes easy.

In a second aspect of the present disclosure, a motor includes the stator and a rotor that is rotatably supported and disposed to face the tips of the teeth.

According to this configuration, the above-mentioned effects can be obtained in the motor.

### BRIEF DESCRIPTION OF THE DRAWINGS

The above and other objects, features and advantages of the present disclosure will become more apparent from the following detailed description made with reference to the accompanying drawings. In the drawings:
FIG. 1 is a schematic configuration diagram of a motor according to an embodiment;
FIG. 2 is a partially enlarged plan view of a stator according to an embodiment; and
FIG. 3 is a partial cross-sectional view of a stator according to an embodiment.

### DETAILED DESCRIPTION

Hereinafter, an embodiment of a motor including a stator will be described with reference to the drawings. In the drawings, for convenience of explanation, part of the configuration may be shown exaggerated or simplified. Also, the dimensional ratio of each part may be different from the actual one.

### (Configuration of Motor 10)

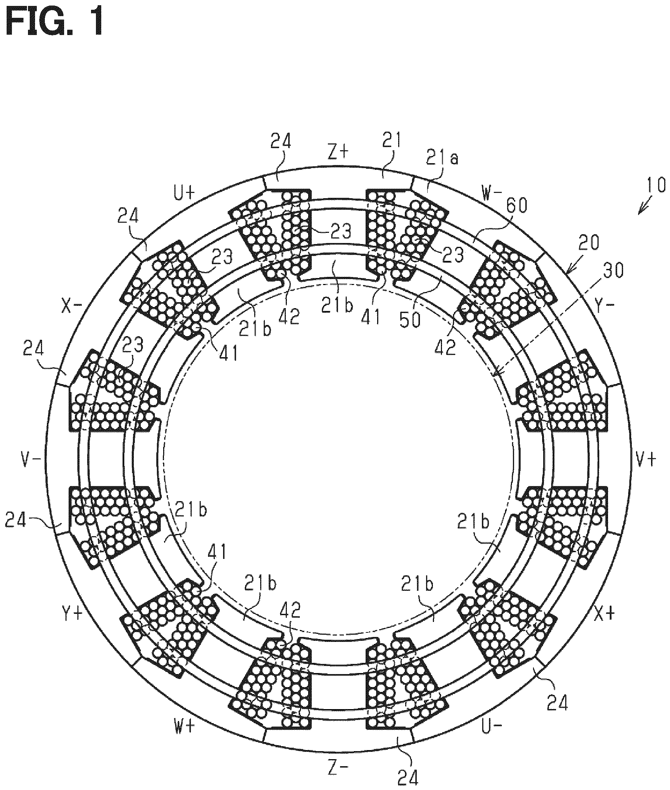

As shown in FIG. 1, a motor 10 includes a stator 20 and a rotor 30. The motor 10 also includes a first inverter circuit and a second inverter circuit (not shown) that are capable of independently generating three-phase AC currents that are 120 degrees out of phase with each other. For example, the first inverter circuit is capable of generating a first system of three-phase AC current having X-phase, Y-phase, and Z-phase. The second inverter circuit is capable of generating a second system of a three-phase AC current having U-phase, V-phase, and W-phase.

### (Configuration of the stator 20)

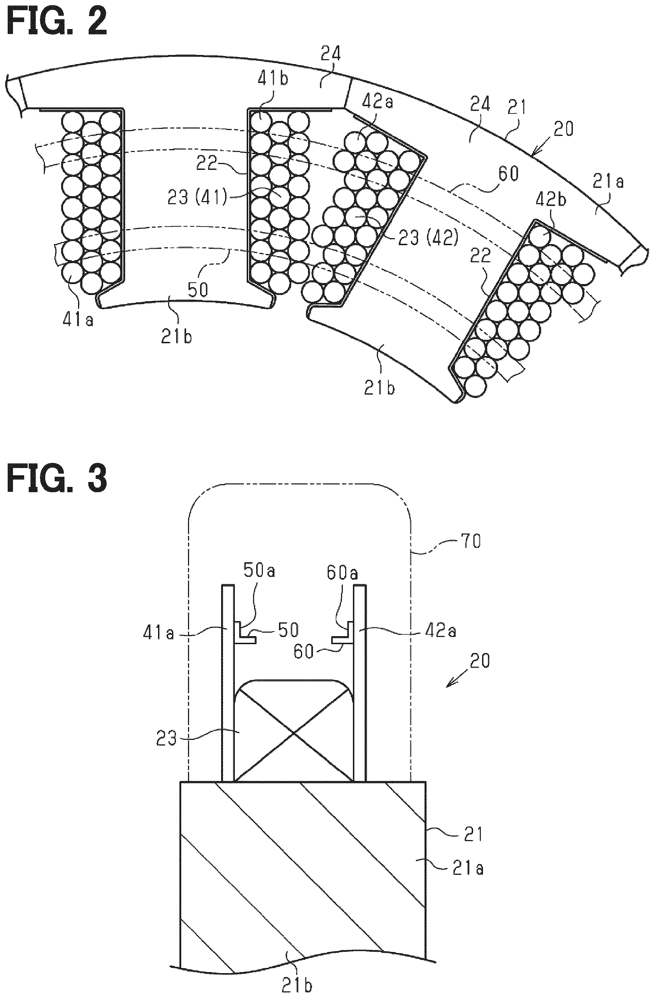

As shown in FIG. 2, the stator 20 includes a stator core 21, an insulator 22, and a winding 23. FIGS. 1 and 2 schematically illustrate cross sections of the insulator 22 and the winding 23. The stator core 21 is configured by a plurality of divided cores 24 separated in a circumferential direction. In the present embodiment, the stator core 21 is made up of twelve divided cores 24. The stator core 21 has an annular portion 21a having a circular ring shape and teeth 21b extending radially inward from the annular portion 21a. The teeth 21 b are provided for each divided core 24. The insulator 22 is attached so as to cover the teeth 21b. The winding 23 is wound around the teeth 21b via the insulator 22 in a concentrated manner.

### (Detailed configuration of winding 23)

The winding 23 has a plurality of first system windings 41 to which a first system of three-phase AC current having X-phase, Y-phase, and Z-phase is supplied, and a plurality of second system windings 42 to which a second system of three-phase AC current having U-phase, V-phase, and W-phase is supplied. The first system windings 41 and the second system windings 42 are arranged alternately in the circumferential direction. That is, the winding 23 has six first system windings 41, namely, X+, X-, Y+, Y-, Z+, and Z-. The winding 23 also has six second system windings 42: U+, U-, V+, V-, W+, and W-. In addition, + and - represent forward and reverse winding.

For example, as shown in FIG. 1, the winding 23 has the first system windings 41 and the second system windings 42 arranged alternately in the circumferential direction in the order of Z+, W-, Y-, V+, X+, U-, Z-, W+, Y+, V-, X-, U+.

As shown in FIG. 2, the first system winding 41 is wound around the teeth 21b in a first arrangement. The second system winding 42 is wound around the teeth 21b in a second arrangement different from the first arrangement while avoiding the first system winding 41 between the teeth 21b adjacent in the circumferential direction. Further, a first neutral conductor 41a which is one of the terminal wires of the first system winding 41 and a second neutral conductor 42a which is one of the terminal wires of the second system winding 42 are drawn out from different positions in the radial direction. In the present embodiment, the first neutral conductor 41a is drawn out from inner side in the radial direction, and the second neutral conductor 42a is drawn out from outer side in the radial direction. Further, a first power supply line 41b which is the other terminal wire of the first system winding 41 and a second power supply line 42b which is the other terminal wire of the second system winding 42 are drawn out from the same position in the radial direction. In the present embodiment, the first power supply line 41b and the second power supply line 42b are both drawn out from outer side in the radial direction. The first power supply line 41b is connected to a first inverter circuit (not shown), and the second power supply line 42b is connected to a second inverter circuit (not shown).

The first system winding 41 and the second system winding 42 are wound in a plurality of rows in the circumferential direction by being sequentially wound along the radial direction and being folded back and forth in the radial direction.

More specifically, the first system winding 41 is wound from a portion that is radially outside and that becomes the first power supply line 41b. The first system winding 41 is wound sequentially radially inward, folded back on the radially inner side and wound sequentially radially outward, and then folded back on the radially outer side and wound sequentially radially inward. As a result, the first system winding 41 is wound in three rows in the circumferential direction. The first system winding 41 is wound the same number of times for each row, and in the present embodiment, is wound eight times in each row. The first system winding 41 is wound so as to cross, on the radially inner side, a center line between the teeth 21b adjacent in the circumferential direction. In addition, since the winding end of the first system winding 41 is positioned on the radially inner side, the first neutral conductor 41a is drawn out from the radially inner side.

The second system winding 42 is wound from a portion that is radially outside and that becomes the second power supply line 42b. The second system winding 42 is wound sequentially radially inward, folded back at the radially inner side and wound sequentially radially outward, folded back at the radially outer side and wound sequentially radially inward, and folded back at the radial middle portion and wound sequentially radially outward. As a result, the second system winding 42 is wound in four rows in the circumferential direction. In the second system winding 42, the winding in the first and second rows are wound eight times, the winding in the third row is wound six times, and the winding in the fourth row is wound two times. Further, the first system winding 41 and the second system winding 42 each have the same number of turns, and are both wound twenty four (24) times in the present embodiment. In addition, since the winding end of the second system winding 42 is positioned on the radially outer side, the second neutral conductor 42a is drawn out from the radially outer side.

The stator 20 also includes a first neutral point terminal 50 and a second neutral point terminal 60.

### (Configuration of the first neutral point terminal 50 and the second neutral point terminal 60)

The first neutral point terminal 50 and the second neutral point terminal 60 are made of a conductive metal material and have a circular shape. In the present embodiment, the first neutral point terminal 50 and the second neutral point terminal 60 are formed in a perfect circular shape.

As shown in Figures 1 and 2, the first neutral point terminal 50 and the second neutral point terminal 60 have different diameters. In detail, the first neutral point terminal 50 is formed in a circular shape having a small diameter, and the second neutral point terminal 60 is formed in a circular shape having a larger diameter than the diameter of the first neutral point terminal 50.

As shown in FIG. 3, the first neutral point terminal 50 and the second neutral point terminal 60 are disposed at the same position in the axial direction. In addition, the first neutral point terminal 50 and the second neutral point terminal 60 in the present embodiment have connection portions 50a, 60a that rise axially from the circular shape.

All of the first neutral conductors 41a are connected to the connection portion 50a of the first neutral point terminal 50. Further, all of the second neutral conductors 42a are connected to the connection portion 60a of the second neutral point terminal 60. In addition, FIG. 3 shows a schematic diagram of the first neutral conductor 41a being connected to the first neutral point terminal 50 and the second neutral conductor 42a being connected to the second neutral point terminal 60. The first neutral point terminal 50 is formed to have a diameter corresponding to the position where the first neutral conductor 41a is pulled out, and the first neutral conductor 41a extends in the axial direction and is connected to the first neutral point terminal 50 with almost no bending. In addition, the second neutral point terminal 60 is formed to have a diameter corresponding to the position where the second neutral conductor 42a is pulled out, and the second neutral conductor 42a extends in the axial direction and is connected to the first neutral point terminal 50 with almost no bending.

As shown in FIG. 3, the stator 20 has a mold resin 70. The mold resin 70 molds the winding 23, the first neutral point terminal 50, the second neutral point terminal 60, and the like. FIG. 3 is a schematic diagram, and does not show the first power supply line 41b, the second power supply line 42b, etc., when they are routed in the circumferential direction.

### (Configuration of rotor 30)

As shown in FIG. 1, the rotor 30 is disposed radially inside the stator 20 so as to face the tips of the teeth 21b, and is rotatably supported. The rotor 30 has a plurality of permanent magnets (not shown) arranged in the circumferential direction.

Next, the operation of the motor 10 configured as above will be described.

The motor 10 includes a first inverter circuit and a second inverter circuit. In addition, the windings 23 of the stator 20 have a plurality of first system windings 41 to which a first system of three-phase AC current is supplied from the first inverter circuit, and a plurality of second system windings 42 to which a second system of three-phase AC current is supplied from the second inverter circuit. Therefore, the motor 10 can be driven by at least one of the first system winding 41 and the second system winding 42, has redundancy.

Next, the effects of the present embodiment are described below.
(1) The first neutral conductor 41a which is one of the terminal wires of the first system winding 41 and the second neutral conductor 42a which is one of the terminal wires of the second system winding 42 are drawn out from different positions in the radial direction. Therefore, each connection is easier than when they are pulled out from the same radial position. In other words, since the drawn-out positions of the first neutral conductor 41a and the second neutral conductor 42a are dispersed in the radial direction, crowding of the first neutral conductor 41a and the second neutral conductor 42a can be avoided, and their connection becomes easy.
(2) The stator 20 has the first neutral point terminal 50 having a circular shape and the second neutral point terminal 60 having a circular shape and a different diameter than the first neutral point terminal 50. Therefore, with a simple configuration, the first neutral conductor 41a and the first neutral point terminal 50 can be connected, and the second neutral conductor 42a and the second neutral point terminal 60 can be connected.
(3) Since the first neutral point terminal 50 and the second neutral point terminal 60 are arranged at the same axial position, it is possible to reduce the axial size of the motor 10 compared to, for example, a stator in which the first neutral point terminal 50 and the second neutral point terminal 60 are arranged at different axial positions.
(4) The number of rows of the first system winding 41 is an odd number, "3," and the number of rows of the second system winding 42 is an even number, "4." Therefore, the first neutral conductor 41a and the second neutral conductor 42a can be naturally pulled out from different radial positions without requiring any special winding method.
(5) Since the first system winding 41 is wound the same number of times for each row, it has the simplest winding method.
(6) The second system winding 42 is wound around the teeth 21b in a second arrangement different from the first arrangement while avoiding the first system winding 41 between adjacent teeth 21b. Therefore, the space factor between the teeth 21b can be increased. In other words, by winding the second system winding 42 in a second arrangement that fills in the remaining area between the teeth 21b in which the first system winding 41 is arranged, the space factor between the teeth 21b can be increased compared to when all are wound in the same arrangement. Specifically, in the present embodiment, the first system winding 41 is wound so as to cross, on the radially inner side, the center line between the teeth 21b adjacent in the circumferential direction. Therefore, even if it is attempted to arrange the second system winding 42 by winding it in the same first arrangement as the first system winding 41, the second system winding 42 overlaps the first system winding 41 on the radially inner side. Therefore, it becomes impossible to arrange the first system winding 41 and the second system winding 42. On the other hand, in the present embodiment, it is possible to avoid overlapping and increase the space factor. The first system winding 41 is supplied with three-phase AC current from the first system, and the second system winding 42 is supplied with three-phase AC current from the second system, and the arrangement is the same in each system, so no imbalance occurs due to different arrangements in each system. Therefore, for example, noise caused by imbalance is suppressed. Also, for example, complex control for reducing the imbalance becomes unnecessary.

The above described embodiments may be modified as follows. The above described embodiments and the following modifications can be implemented in combination with one another as long as there is no technical contradiction.

In the above embodiment, the first neutral point terminal 50 is circular, and the second neutral point terminal 60 is circular and has a different diameter from the first neutral point terminal 50. However, the present disclosure is not limited to this configuration. For example, the first neutral point terminal 50 and the second neutral point terminal 60 may have other shapes.

In the above embodiment, the first neutral point terminal 50 and the second neutral point terminal 60 are arranged at the same positions in the axial direction, but the present disclosure is not limited to this configuration and they may be arranged at different axial positions.

In the above embodiment, the number of rows of the first system winding 41 is an odd number, that is, "3," and the number of rows of the second system winding 42 is an even number, that is, "4." However, the present disclosure is not limited to this configuration and may be another number. For example, the number of rows of the first system winding 41 and the second system winding 42 may be changed to another number as long as one of them is an odd number and the other is an even number. Furthermore, the number of rows of the first system winding 41 and the second system winding 42 may both be odd numbers, may both be even numbers, or may be the same number.

In the above embodiment, the first system winding 41 is wound the same number of times for each row, i.e., eight turns for each row. However, the present disclosure is not limited to this configuration. For example, the first system winding 41 may be wound a different number of times for each row, or may be wound a number other than eight turns for each row.

In the above embodiment, the stator 20 includes the mold resin 70. However, the present disclosure is not limited to this configuration. The stator 20 may not include the mold resin 70.

In the above embodiment, the stator 20 has twelve teeth 21b. However, the present disclosure is not limited to this configuration. For example, the stator 20 may have another number of teeth 21b, such as 24 teeth.

Although the present disclosure has been described in accordance with the examples, it is understood that the disclosure is not limited to such examples or structures. The present disclosure encompasses various modifications and variations within the scope of equivalents. In addition, while the various combinations and configurations, which are preferred, other combinations and configurations, including more, less or only a single element, are also within the spirit and scope of the present disclosure.

The features of the present disclosure are as follows.
[1] A stator (20) includes a plurality of teeth (21) arranged in a circumferential direction and extending in a radial direction, and a winding (23) wound around the teeth in concentrated winding. The winding includes a plurality of first system windings (41) to which a first system of current is supplied and a plurality of second system windings (42) to which a second system of current is supplied. A first neutral conductor (41a), which is one terminal wire of the first system winding, and a second neutral conductor (42a), which is one terminal wire of the second system winding, are drawn out from different positions in the radial direction.
[2] A stator according to the above [1] includes a first neutral point terminal (50) to which the first neutral conductor is connected, which is circular and a second neutral point terminal (60) to which the second neutral conductor is connected, which is circular and has a different diameter than the first neutral point terminal.
[3] In a stator according to the above [2], the first neutral point terminal and the second neutral point terminal are disposed at a same position in the axial direction.
[4] In a stator according to any one of the above [1] to [3], the first system winding and the second system winding are wound in a plurality of rows in the circumferential direction by being sequentially wound along the radial direction and being folded back and forth in the radial direction, and the number of rows of the first system windings and the second system windings is such that one of the rows is an odd number and the other is an even number.
[5] In a stator according to the above [4], either the first system winding or the second system winding is wound a same number of times for each row.
[6] A motor (10) includes a stator according to any one of the above [1] to [5], and a rotor (30) disposed opposite the tips of the teeth and rotatably supported.

## Claims

1. A stator (20), comprising:
a plurality of teeth (21b) arranged in a circumferential direction and extending in a radial direction; and
a winding (23) wound around the teeth by concentrated winding,
wherein
the winding includes a plurality of first system windings (41) to which a first system current is supplied, and a plurality of second system windings (42) to which a second system current is supplied, and
a first neutral conductor (41a), which is one of terminal wires of the first system winding, and a second neutral conductor (42a), which is one of terminal wires of the second system winding, are drawn out from different positions in the radial direction.

2. The stator according to claim 1, further comprising,
a first neutral point terminal (50) to which the first neutral conductor is connected, which is circular, and
a second neutral point terminal (60) to which the second neutral conductor is connected, which is circular and has a different diameter than the first neutral point terminal.

3. The stator according to claim 2, wherein
the first neutral point terminal and the second neutral point terminal are disposed at a same position in an axial direction.

4. The stator according to claim 2, wherein
the first system windings and the second system windings are wound in a plurality of rows in the circumferential direction by being sequentially wound along the radial direction and being folded back and forth in the radial direction, and
number of rows of the first system windings and the second system windings is such that one of the rows is an odd number and the other is an even number.

5. The stator according to claim 4, wherein
either the first system windings or the second systems windings are wound a same number of times for each row.

6. A motor (10), comprising:
a stator according to any one of claims 1 to 5; and
a rotor (30) disposed opposite tips of the teeth and rotatably supported.
